# EUROPÄISCHE PATENTSCHRIFT

(11) **EP 2 862 218 B1**
(45) Veröffentlichungstag und Bekanntmachung des Hinweises auf die Patenterteilung: **23.03.2016**
(21) Anmeldenummer: 13727882.6
(22) Anmeldetag: 07.06.2013
(51) Int. Cl.: H02H 7/18, H02H 3/08, H02J 7/00, H01M 2/34

(54) **BATTERIEMANAGEMENTSYSTEM, KRAFTFAHRZEUG UND BATTERIEMODUL**
BATTERY MANAGEMENT SYSTEM, MOTOR VEHICLE AND BATTERY MODULE
SYSTÈME DE GESTION DE BATTERIE, VÉHICULE AUTOMOBILE ET MODULE DE BATTERIE

(30) Priorität: 18.06.2012 DE 102012210166
(43) Veröffentlichungstag der Anmeldung: 22.04.2015
(73) Patentinhaber: Robert Bosch GmbH, 70442 Stuttgart (DE); Samsung SDI Co., Ltd., Gyeonggi-do 449-577 (KR)
(72) Erfinder: FINK, Holger, 70567 Stuttgart (DE)
(74) Vertreter: Bee, Joachim
(86) Internationale Anmeldenummer: PCT/EP2013/061759
(87) Internationale Veröffentlichungsnummer: WO 2013/189758

(56) Entgegenhaltungen:
- WO-A1-2010/133176
- US-A1- 2011 228 436
- US-A1- 2012 034 497

## Beschreibung

Die vorliegende Erfindung betrifft ein Batteriemanagementsystem für Batteriemodule mit mindestens einer Batteriezelle, zum Beispiel einer Lithium-Ionen-Batteriezelle. Ferner betrifft die vorliegende Erfindung ein Kraftfahrzeug.

### Stand der Technik

Batteriemodule mit einer oder mehreren Lithium-Ionen-Batteriezellen sind zum Beispiel in Kraftfahrzeugen, etwa Elektro- oder Hybridkraftfahrzeuge, in Verbindung mit Antrieben der Kraftfahrzeuge zu finden.

Batteriemodule für den Einsatz im Antriebsstrang von Kraftfahrzeugen werden auch Traktionsbatteriemodule genannt. Solche Batteriemodule können als Systeme aus Batterie und Batteriemanagementsystem ausgebildet sein. Um die bei Hybrid- und Elektrofahrzeugen geforderte Leistung zu erbringen, werden in den Batteriemodulen Batteriezellen in Reihe und teilweise auch parallel geschaltet. Bei Elektrofahrzeugen weisen Batterien teilweise Spannungen über 450 V auf, und auch bei Hybridfahrzeugen wird die für den Kontakt mit Menschen als Unbedenklichkeitsschwelle angenommene Spannung von 60 V überschritten. Werden solche Batterien durch externe Ereignisse wie Unfälle oder Fehlfunktion in der Ansteuerung eines Leistungsschalters kurzgeschlossen, so können in den Batteriezellen Ströme mit Stromstärken entstehen, die ein Bersten oder Feuerfangen der Batterie bewirken können.

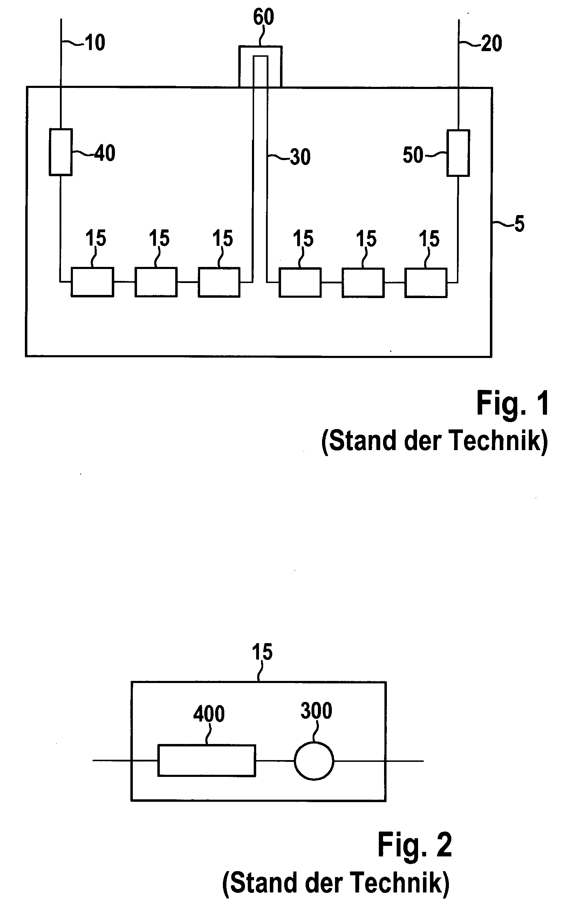

In der Figur 1 ist ein Prinzipschaltbild eines Traktionsbatteriemoduls 5 nach dem Stand der Technik gezeigt, wie es etwa aus der Offenlegungsschrift DE 10 2009 000 682 bekannt ist. Figur 1 zeigt zwei Pole 10 und 20, die über einen Strompfad 30 elektrisch verbunden sind, auf dem Batteriezellen 15 als Spannungsquellen in Reihe angeordnet sind, so dass über die Pole eine durch die Zellen 15 kumulativ zur Verfügung gestellte Spannung abgenommen werden kann. Daneben weist das Modul eine Lade- und Trennvorrichtung 40 am Pluspol 10, eine Trennvorrichtung 50 am Minuspol 20 und einen Servicestecker 60 auf.

In der Figur 2 ist ein Prinzipschaltbild einer Batteriezelle 15 nach dem Stand der Technik gezeigt, wie sie etwa aus dem US Patent 5 939 217 bekannt ist. Es zeigt zwei Pole 100 und 200, über die eine durch die Zelle 15 zur Verfügung gestellte Spannung einer Spannungsquelle 300 abgenommen werden kann. Daneben weist die Zelle eine Sicherung 400 am Pluspol 100 auf. Die Sicherung 400 hat die Funktion, in Falle eines abnormen Zustandes von Temperatur oder Stromfluss in der Batteriezelle 15 die Spannungsquelle 300 zuverlässig vom Pluspol 100 zu trennen.

Aus der internationalen Patentanmeldung WO1993010589 ist eine Vorrichtung zur Ausbalancierung der Ladezustände von Untereinheiten einer Batterie bekannt. Jede Untereinheit ist mit einem Entladestromkreis mit in Reihe geschalteten Widerständen und Sicherungen versehen. Der Entladestromkreis ist schaltbar.

### Offenbarung der Erfindung

Erfindungsgemäß wird ein Batteriemanagementsystem für ein Batteriemodul mit mindestens einer Batteriezelle zur Verfügung gestellt, wobei das Batteriemanagementsystem so ausgelegt ist, dass es in Reaktion auf ein Auslösesignal einen Strompfad zwischen Polen des Batteriemoduls bereitstellen kann. Erfindungsgemäß ist dabei der Strompfad so ausgelegt, dass durch die Bereitstellung des Strompfades ein Lichtbogen in einer Sicherung der mindestens einen Batteriezelle nach Auslösen der Sicherung verhindert oder beendet wird.

Dies erhöht die Sicherheit vor Gefahren, die von einer Batteriezelle mit Sicherung ausgehen können, wenn sich nach Auslösen der Sicherung ein Lichtbogen bildet. Die Erfinder haben nämlich festgestellt, dass es in Traktionsbatteriemodulen mit Batteriezellen mit integrierter Sicherung zur Lichtbogenbildung nach Auslösen der Sicherung kommen kann.

In einer ersten vorteilhaften Ausführungsform ist der Strompfad so ausgelegt, dass bei Bereitstellung des zweiten Strompfades ein Auslösen der mindestens einen Sicherung bewirkt wird. Dies erlaubt ein kontrolliertes Auslösen der Sicherung.

In einer zweiten vorteilhaften Ausführungsform umfasst das Batteriemanagementsystem eine Vorrichtung zum Erkennen eines Auslösens der Sicherung und zur Bereitstellung des Auslösesignals in Reaktion auf das Erkennen des Auslösens der mindestens einen Sicherung. Dies erlaubt das Verhindern von Lichtbögen nach Auslösen der Sicherung durch externe Ereignisse.

In einer Variante umfasst das Batteriemanagementsystem gemäß dem ersten vorteilhaften Ausführungsbeispiel eine Vorrichtung zum Empfang des Auslösesignals.

Dies ermöglicht die Verwendung in einem Kraftfahrzeug zusammen mit einer Vorrichtung zur Bereitstellung des Auslösesignals in Reaktion auf das Erkennen einer Kraftfahrzeuggefahrensituation, wobei die Vorrichtung zum Empfang des Auslösesignals mit der Vorrichtung zur Bereitstellung des Auslösesignals verbunden ist. Brand oder Bersten eines Traktionsbatteriemoduls eines Hybrid- oder Elektrofahrzeugs infolge einer Kraftfahrzeuggefahrensituation können so verhindert werden.

Weiterhin werden ein Kraftfahrzeug nach Anspruch 6 und ein Batteriemodul gemäß Anspruch 7 vorgestellt.

### Zeichnungen

Ausführungsbeispiele der Erfindung werden anhand der Zeichnungen und der nachfolgenden Beschreibung näher erläutert. Es zeigen:
- Figur 1: ein Prinzipschaltbild eines Traktionsbatteriemoduls nach dem Stand der Technik,
- Figur 2: ein Prinzipschaltbild einer Batteriezelle nach dem Stand der Technik,
- Figur 3: ein Prinzipschaltbild einer ersten beispielhaften Ausführungsform der Erfindung, und
- Figur 4: ein Prinzipschaltbild einer zweiten beispielhaften Ausführungsform der Erfindung.

### Ausführungsformen der Erfindung

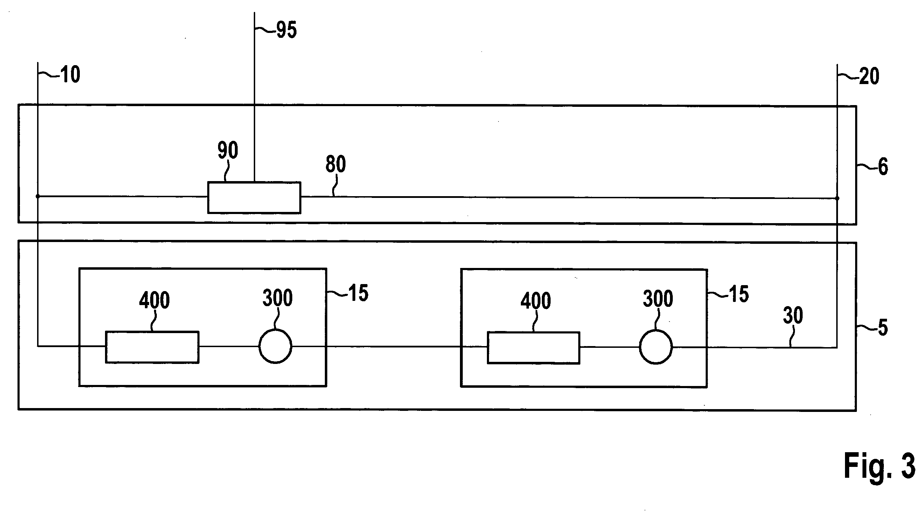

In Figur 3 ist ein Prinzipschaltbild einer ersten beispielhaften Ausführungsform der Erfindung gezeigt. Es zeigt ein Batteriemodul 5 mit zwei Polen 10 und 20, die über einen Strompfad 30 elektrisch verbunden sind, auf dem Batteriezellen 15 mit Spannungsquellen 300 und Sicherungen 400 in Reihe angeordnet sind, so dass über die Pole 10, 20 des Moduls 5 eine durch die Zellen 15 zur Verfügung gestellte Spannung abgenommen werden kann. Figur 3 zeigt weiterhin ein Batteriemanagementsystem 6 mit einem zweiten, parallelen Strompfad 80, über den die Pole 10 und 20 des Batteriemoduls 5 elektrisch verbunden werden können. In der gezeigten beispielhaften Ausführungsform kann der zweite Strompfad 80 durch Schließen eines Schalters 90 bereitgestellt werden. Das Batteriemanagementsystem 6 verfügt dabei über einen Eingang 95 zum Empfang eines Auslösesignals, das das Schließen des Schalters 90 bewirkt.

Der zweite Strompfad 80 ist dabei niedrigohmig, also mit einem niedrigen elektrischen Widerstandswert ausgebildet, der ein kontrolliertes Kurzschließen des Moduls 5 ermöglicht. Durch Schließen des zweiten Strompfades 80 werden in den Zellen 15 Ströme erzeugt, die ein Auslösen mindestens einer der Sicherungen 400 und so die Unterbrechung des ersten Strompfades bewirken.

Die durch Schließen des zweiten Strompfades 80 erzeugten Ströme sind jedoch nicht so hoch, dass hierdurch Lichtbögen in ausgelösten Sicherungen 400 entstehen könnten oder vor Schließen des zweiten Strompfades 80 bereits bestehende Lichtbögen weiterbestehen können.

Das Batteriemodul 5 gemäß dem ersten beispielhaften Ausführungsbeispiel ist zur Verwendung in einem Kraftfahrzeug in Verbindung mit einem System zum Erkennen von Kraftfahrzeuggefahrensituationen, z. B. einem Crash-Sensor, geeignet. Nach Erkennen einer Gefahrensituation, etwa eines Unfalls, sendet der Crash-Sensor ein Auslösesignal an das Batteriemodul 5 bzw. das Batteriemanagementsystem 6, welches in Reaktion auf Empfang des Auslösesignals den zweiten Strompfad 80 schließt und so einen kontrollierten Kurzschluss der in der Batterie zusammengefassten Zellen bewirkt.

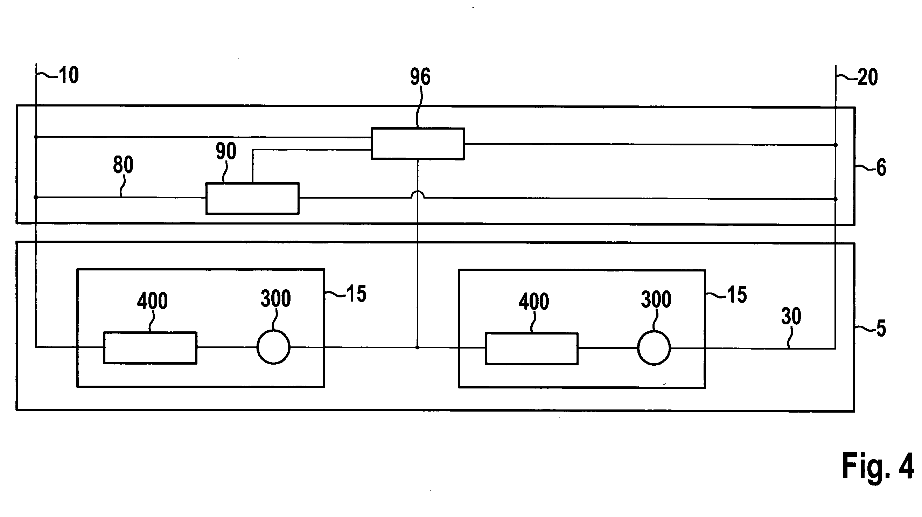

In Figur 4 ist ein Prinzipschaltbild einer zweiten beispielhaften Ausführungsform der Erfindung gezeigt. Dieses unterscheidet sich von dem in Figur 3 gezeigten Prinzipschaltbild darin, dass das Auslösesignal, mit dem die Bereitstellung des zweiten Strompfades 80 bewirkt werden kann, von einer Vorrichtung 96 zum Erkennen eines Auslösens einer der Sicherungen 400 in Reaktion auf das Erkennen des Auslösens einer der Sicherungen 400 bereitgestellt wird. In der gezeigten zweiten beispielhaften Ausführungsform umfasst die Vorrichtung 96 Senseleitungen zur Erfassung der Zellspannungen der Batteriezellen 15.

Erkennt die Vorrichtung 96, dass mindestens eine der Sicherungen 400 ausgelöst wurde, so erzeugt sie das Auslösesignal, das das Schließen des Schalters 90 und damit das Bereitstellen des zweiten Strompfades 80 bewirkt. Der zweite Strompfad 80 ist dabei niedrigohmig, also mit einem niedrigen elektrischen Widerstandswert ausgebildet, so dass eine eventuell zwischen den Polen 10, 20 des Moduls 5 bestehende Spannungsdifferenz, die ohne den zweiten Strompfad 80 zur Bildung eines Lichtbogens in der geschmolzenen Sicherung 400 führen könnte oder bereits geführt hat, dann über den zweiten Strompfad 80 abgebaut und die Lichtbogenbildung somit verhindert oder beendet werden kann.

## Patentansprüche

1. Batteriemanagementsystem (6) für ein Batteriemodul (5) mit mindestens einer Batteriezelle (15), wobei das Batteriemanagementsystem (6) so ausgelegt ist, dass es in Reaktion auf ein Auslösesignal einen Strompfad (80) zwischen Polen des Batteriemoduls (5) bereitstellen kann, **dadurch gekennzeichnet, dass**
der Strompfad (80) so ausgelegt ist, dass durch die Bereitstellung des Strompfades (80) ein Lichtbogen in einer Sicherung (400) der mindestens einen Batteriezelle (15) nach Auslösen der Sicherung (400) verhindert oder beendet wird.

2. Batteriemanagementsystem (6) nach Anspruch 1, wobei der Strompfad (80) so ausgelegt ist, dass bei Bereitstellung des Strompfades (80) ein Auslösen der mindestens einen Sicherung (400) bewirkt wird.

3. Batteriemanagementsystem (6) nach Anspruch 1, wobei das Batteriemanagementsystem (6) eine Vorrichtung (96) zum Erkennen eines Auslösens der Sicherung (400) und zur Bereitstellung des Auslösesignals in Reaktion auf das Erkennen des Auslösens der mindestens einen Sicherung (400) umfasst.

4. Batteriemanagementsystem (6) nach einem der Ansprüche 1 bis 2, wobei das Batteriemanagementsystem (6) eine Vorrichtung (95) zum Empfang des Auslösesignals umfasst.

5. Kraftfahrzeug mit einem Batteriemanagementsystem (6) nach Anspruch 4 und einer Vorrichtung zur Bereitstellung des Auslösesignals in Reaktion auf das Erkennen einer Kraftfahrzeuggefahrensituation, wobei die Vorrichtung (95) zum Empfang des Auslösesignals mit der Vorrichtung zur Bereitstellung des Auslösesignals verbunden ist.

6. Kraftfahrzeug mit einem Batteriemanagementsystem (6) nach Anspruch 3.

7. Batteriemodul (5) mit einem Batteriemanagementsystem (6) nach einem der Ansprüche 1 bis 4.

## Claims

1. Battery management system (6) for a battery module (5) having at least one battery cell (15), wherein the battery management system (6) is designed such that it can provide a current path (80) between poles of the battery module (5) in response to a tripping signal, **characterized in that** the current path (80) is designed such that an arc in a fuse (400) of the at least one battery cell (15) after the fuse (400) has been tripped is prevented or terminated by the provision of the current path (80).

2. Battery management system (6) according to Claim 1, wherein the current path (80) is designed such that the at least one fuse (400) is tripped when the current path (80) is provided.

3. Battery management system (6) according to Claim 1, wherein the battery management system (6) comprises an apparatus (96) for identifying tripping of the fuse (400) and for providing the tripping signal in response to tripping of the at least one fuse (400) being identified.

4. Battery management system (6) according to either of Claims 1 and 2, wherein the battery management system (6) comprises an apparatus (95) for receiving the tripping signal.

5. Motor vehicle having a battery management system (6) according to Claim 4 and having an apparatus for providing the tripping signal in response to a hazardous situation for a motor vehicle being identified, wherein the apparatus (95) for receiving the tripping signal is connected to the apparatus for providing the tripping signal.

6. Motor vehicle having a battery management system (6) according to Claim 3.

7. Battery module (5) having a battery management system (6) according to one of Claims 1 to 4.

## Revendications

1. Système de gestion de batterie (6) destiné à un module de batterie (5) comportant au moins une cellule de batterie (15), dans lequel le système de gestion de batterie (6) est conçu pour pouvoir créer, en réaction à un signal de déclenchement, un trajet de courant (80) entre des pôles du module de batterie (5),
**caractérisé en ce que** le trajet de courant (80) est conçu de manière à ce qu'un arc électrique soit évité ou interrompu dans un fusible (400) de l'au moins une cellule de batterie (15) après le déclenchement du fusible (400) du fait de la création du trajet de courant (80).

2. Système de gestion de batterie (6) selon la revendication 1, dans lequel le trajet de courant (80) est conçu de manière à ce qu'un déclenchement de l'au moins un fusible (400) soit provoqué lors de la création du trajet de courant (80).

3. Système de gestion de batterie (6) selon la revendication 1, dans lequel le système de gestion de batterie (6) comprend un dispositif (96) destiné à détecter un déclenchement du fusible (400) et à fournir le signal de déclenchement en réaction à la détection du déclenchement de l'au moins un fusible (400).

4. Système de gestion de batterie (6) selon l'une des revendications 1 et 2, dans lequel le système de gestion de batterie (6) comprend un dispositif (95) destiné à recevoir le signal de déclenchement.

5. Véhicule automobile comportant un système de gestion de batterie (6) selon la revendication 4 et un dispositif destiné à fournir le signal de déclenchement en réaction à la détection d'une situation de conduite du véhicule à moteur, dans lequel le dispositif (95) est connecté au dispositif destiné à fournir le signal de déclenchement pour recevoir le signal de déclenchement.

6. Véhicule automobile comportant un système de gestion de batterie (6) selon la revendication 3.

7. Module de batterie (5) comportant un système de gestion de batterie (6) selon l'une quelconque des revendications 1 à 4.
